# EUROPÄISCHE PATENTSCHRIFT

(11) **EP 0 983 926 B1**
(45) Veröffentlichungstag und Bekanntmachung des Hinweises auf die Patenterteilung: **05.11.2003**
(21) Anmeldenummer: 99115743.9
(22) Anmeldetag: 10.08.1999
(51) Int. Cl.: B62D 5/06, B62D 5/30

(54) **Lenksystem für nicht spurgebundene Kraftfahrzeuge**
Steering system for non rail-borne motor vehicles
Système de direction pour automobiles non guidées

(30) Priorität: 02.09.1998 DE 19839953
(43) Veröffentlichungstag der Anmeldung: 08.03.2000
(73) Patentinhaber: DaimlerChrysler AG, 70567 Stuttgart (DE)
(72) Erfinder: Bohner, Hubert, 71032 Böblingen (DE); Moser, Martin, 70736 Fellbach (DE); Schneckenburger, Reinhold, 71277 Rutesheim (DE)

(56) Entgegenhaltungen:
- DE-A- 4 304 664
- DE-C- 19 540 956
- DE-C- 19 546 733
- DE-C- 19 627 893

## Beschreibung

Die Erfindung betrifft ein Lenksystem für nicht spurgebundene Kraftfahrzeuge, mit einer vom Fahrer betätigten Lenkhandhabe, z.B. Lenkhandrad, einem Lenkstellantrieb zur Lenkverstellung lenkbarer Fahrzeugräder, einem mit der Lenkhandhabe betätigbaren Lenkwinkel-Sollwertgeber, einem mit den lenkbaren Fahrzeugrädern betätigbaren Lenkwinkel-Istwertgeber, einer den Lenkstellantrieb in Abhängigkeit von einem Vergleich der Soll- und Istwerte des Lenkwinkels steuernden und sich sowie mit ihr zusammenwirkende Sensorik ständig auf Fehlfunktion überprüfenden Regelanordnung und einer zwischen der Lenkhandhabe und den lenkbaren Fahrzeugrädern angeordneten mechanischen oder hydraulischen Zwangskopplung, welche bei korrekt arbeitender Regelanordnung geöffnet wird bzw. offen bleibt (unwirksamer Normalzustand) und bei fehlerhafter Regelanordnung automatisch geschlossen wird (wirksamer Sonderzustand).

Derartige Lenksysteme, die nach dem Konzept "Steer by wire" arbeiten, sind grundsätzlich bekannt (zum Beispiel aus der DE 19546733A) und werden für zukünftige Kraftfahrzeuge entwickelt. Diese Systeme bieten den grundsätzlichen Vorteil, daß sie zumindest hinsichtlich der Regelanordnung sowie der zugehörigen Sensorik ohne konstruktive Abänderungen für unterschiedlichste Fahrzeuge geeignet sind. Durch entsprechende Programmierung kann einerseits praktisch jedes Übersetzungsverhältnis zwischen dem Stellhub der Lenkhandhabe und der Lenkwinkeländerung der gelenkten Fahrzeugräder verwirklicht werden. Darüber hinaus besteht die Möglichkeit, die Regelanordnung mit zusätzlichen Sensoren zu verbinden, um vorzugebende Parameter, z.B. Seitenwindeinflüsse, selbsttätig zu berücksichtigen bzw. auszuregeln.

Um das erforderliche Maß an Sicherheit bei Systemfehlern gewährleisten zu können, ist vorgesehen, beim Auftreten eines Fehlers in der Regelanordnung bzw. beim Ausfall von Signalen, die von der Regelanordnung ausgewertet werden sollen, automatisch eine Betriebsweise für anormalen Betrieb bzw. Notfallbetrieb einzuschalten. Bei dieser Betriebsweise ist eine Zwangskopplung zwischen Lenkhandhabe und gelenkten Fahrzeugrädern vorgesehen, so daß das Lenksystem prinzipiell nach Art einer herkömmlichen Lenkung arbeitet, wobei allerdings die bei herkömmlichen Lenkungen übliche mechanische Lenksäule gegebenenfalls durch andere mechanische Systeme oder auch durch hydraulische Systeme, insbesondere hydrostatische Systeme, ersetzt sein kann.

Aufgabe der Erfindung ist es nun, bei einem Lenksystem der eingangs angegebenen Art extreme Lenkstellkräfte für die lenkbaren Fahrzeugräder zu ermöglichen.

Diese Aufgabe wird erfindungsgemäß dadurch gelöst, daß die Regelanordnung einen Parameter, der mit zwischen Lenkstellantrieb und lenkbaren Fahrzeugrädern übertragenen Kräften bzw. Momenten korreliert ist, auswertet bzw. erfaßt und die Zwangskopplung bei hoher Belastung des Stellantriebes unterstützend bzw. parallel zum Lenkstellantrieb wirksam schaltet, so daß eine die Lenkhandhabe beaufschlagende Handkraft den Stellantrieb zu unterstützen vermag.

Die Erfindung beruht auf dem allgemeinen Gedanken, den beim Normalbetrieb der Lenkung zur Lenkverstellung der lenkbaren Fahrzeugräder allein wirksamen Lenkstellantrieb mit begrenzter Leistung auszulegen, welche zwar zur Durchführung typischer Lenkmanöver in jedem Falle hinreichend sein soll, jedoch nicht für Lenkmanöver mit extremem Kraftbedarf ausreicht. Ein solcher Fall mit extremem Kraftbedarf kann beispielsweise eintreten, wenn das Fahrzeug eine Position erreicht bzw. einnimmt, bei der ein lenkbares Fahrzeugrad mit einer Rad- bzw. Reifenflanke einer Stufe bzw. Bordsteinkante unmittelbar benachbart ist oder mit der Rad- bzw. Reifenflanke an der Stufe bzw. Bordsteinkante schleift. Wenn nun ein Lenkmanöver notwendig wird, bei dem dieses Rad gegen die Stufe bzw. Bordsteinkante gelenkt wird und die Stufe bzw. Bordsteinkante in Aufwärtsrichtung überfahren soll, werden extrem hohe Lenkkräfte notwendig. Solche Situationen können auftreten, wenn für ein straßenseitig unmittelbar neben einer höheren Bordsteinkante geparktes Fahrzeug nur wenig Manövrierraum zur Verfügung steht, weil weitere Fahrzeuge dicht vor und dicht hinter dem vorgenannten Fahrzeug parken.

Da erfindungsgemäß in solchen Extremsituationen die Zwangskopplung zwischen Lenkhandhabe und gelenkten Fahrzeugrädern parallel zum Stellantrieb wirksam wird, kann der Fahrer mit seiner Handkraft den Stellantrieb unterstützen, mit dem Ergebnis, daß die Leistungsfähigkeit des Stellantriebes deutlich übersteigende Gesamtlenkkräfte erzeugbar sind.

Durch entsprechende Bemessung des Lenkstellantriebes ergeben sich bei den vorgenannten extremen Lenkmanövern ähnliche Handkräfte an der Lenkhandhabe, wie sie in vergleichbaren Fahrsituationen bei herkömmlichen Servolenkungen auftreten, die einen ständig wirksamen mechanischen Durchtrieb zwischen Lenkhandrad und gelenkten Fahrzeugrädern aufweisen und deren Servomotor lediglich eine das jeweilige Lenkmanöver unterstützende, begrenzte Hilfskraft zusätzlich zu der vom Fahrer aufzubringenden Handkraft erzeugt.

Beim den Lenkstellantrieb unterstützenden Betrieb der Zwangskopplung wird von der Regelanordnung ein Parameter ausgewertet bzw. erfaßt, der mit zwischen Lenkhandhabe und lenkbaren Fahrzeugrädern übertragenen Kräften bzw. Momenten korreliert ist, wobei die Regelanordnung den Lenkstellantrieb nur gleichgerichtet zu den mittels der Lenkhandhabe erzeugten Lenkstellkräften steuert.

Da die Regelanordnung außerdem - wie beim Normalbetrieb - den mit den übertragenen Kräften bzw. Momenten zwischen Lenkstellantrieb und gelenkten Fahrzeugrädern korrelierten Parameter bzw. den mit den Kräften am Lenkstellantrieb korrelierten Parameter erfaßt, "weiß" die Regelanordnung damit immer, welche Gesamtlenkkräfte an den gelenkten Fahrzeugrädern wirksam sind.

Dementsprechend kann die Zwangskopplung wieder aufgetrennt werden, sobald die Summe der zwischen Lenkhandhabe und lenkbaren Fahrzeugrädern übertragenen Kräfte und Momente sowie der zwischen Stellantrieb und gelenkten Fahrzeugrädern übertragenen Kräfte bzw. Momente einen vorgebbaren oder vorgegebenen Schwellwert unterschreitet, der (zumindest etwas) unterhalb des maximalen Wertes der vom Stellantrieb erzeugbaren Kräfte oder Momente liegt.

Im Hinblick auf die Betriebssicherheit ist es zweckmäßig, wenn die Regelanordnung die Relativpositionen von Lenkwinkel-Istwertgeber und Lenkwinkel-Sollwertgeber beim Schließen der Zwangskopplung registriert. Damit "kennt" die Regelanordnung unter Berücksichtigung der Lenkkinematik bei eingeschalteter Zwangskopplung miteinander korrespondierenden Signale von Soll- und Istwertgeber. Auf diese Weise wird die Möglichkeit geschaffen, den Lenkstellantrieb in Abhängigkeit von Betrag und Richtung der Abweichung des Istwertgeber-Signales gegenüber dem zum jeweiligen Sollwertgeber-Signal korrespondierenden Signal des Istwertgebers zu regeln. Aufgrund unvermeidlicher oder konstruktiv gewollter Elastizitäten in der Zwangskopplung wird eine zu den zwischen Lenkhandhabe und gelenkten Fahrzeugrädern übertragenen Kräften analoge Abweichung zwischen den Signalen des Istwertgebers einerseits und den vorgenannten korrespondierenden Werten andererseits auftreten.

Im übrigen wird hinsichtlich bevorzugter Merkmale der Erfindung auf die Ansprüche sowie die nachfolgende Erläuterung der Zeichnung verwiesen, anhand der besonders bevorzugte Ausführungsformen der Erfindung beschrieben werden.

Dabei zeigt
- Fig. 1: eine schaltplanartige Darstellung einer ersten Ausführungsform,
- Fig. 2: eine entsprechende Darstellung einer zweiten Ausführungsform und
- Fig. 3: eine entsprechende Darstellung einer weiteren Ausführungsform der Erfindung.

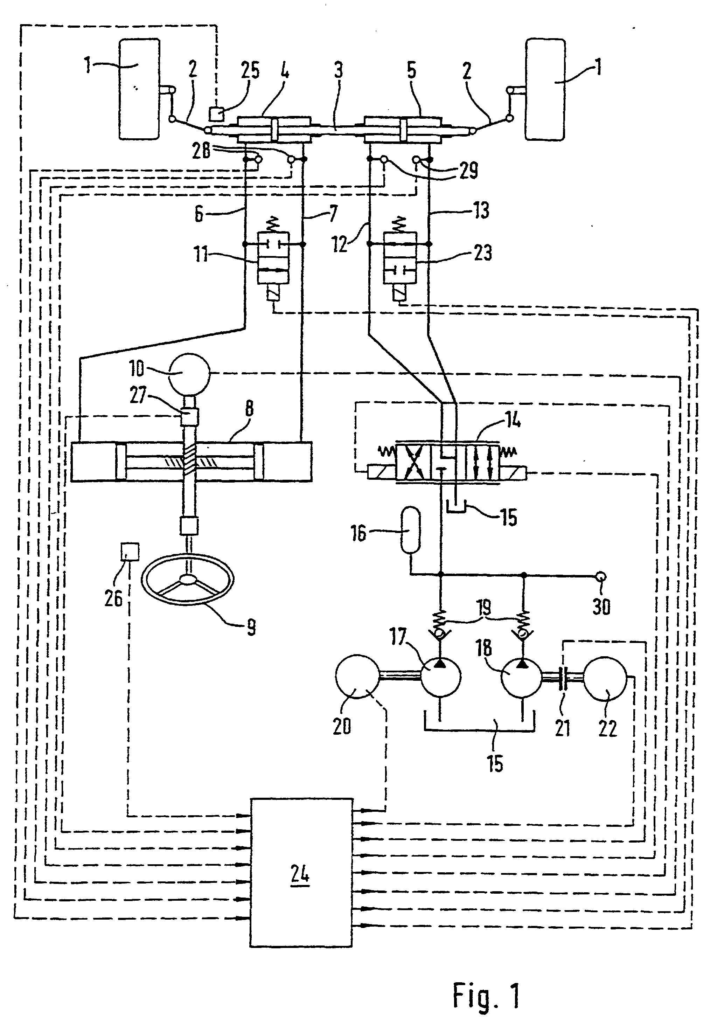

Bei dem in Fig. 1 dargestellten Beispiel besitzt ein nicht näher dargestelltes Kraftfahrzeug lenkbare Vorderräder 1, die über Spurstangen 2 sowie eine Stange 3 miteinander lenkverstellbar gekoppelt sind.

Die Stange 3 bildet die Kolbenstange von zwei parallel zueinander angeordneten Kolben-Zylinder-Aggregaten 4 und 5, die jeweils als doppeltwirkende Aggregate ausgebildet sind.

Das Kolben-Zylinder-Aggregat 4 ist über zwei Hydraulikleitungen 6 und 7 mit den beiden Kolbenarbeitsräumen eines doppeltwirkenden Kolben-Zylinder-Aggregates 8 gekoppelt, dessen Kolben mechanisch mit einem Lenkhandrad 9 zwangsgekoppelt sind. Die Kolben des Aggregates 8 verschieben sich nach rechts bzw. links, wenn das Lenkhandrad im Uhrzeigersinn bzw. entgegen dem Uhrzeigersinn gedreht wird. Bei Verschiebung der Kolben des Kolben-Zylinder-Aggregates 8 wird das Lenkhandrad entsprechend gedreht.

Im übrigen ist das Lenkhandrad 9 mit einem selbsthemmungfreien Elektromotor 10 antriebsmäßig verbunden, welcher bei festgehaltener Motorwelle als reiner Krafterzeuger zu arbeiten vermag und dessen Zweck weiter unten erläutert wird.

Zwischen den Hydraulikleitungen 6 und 7 ist ein normal geschlossenes Absperrventil 11 angeordnet, welches sich durch Bestromung seines Stellmagnetes gegen die Kraft einer Rückstellfederung aus der dargestellten Schließlage in seine Offenstellung umschalten läßt und bei Abschaltung des den Stellmagnet beaufschlagenden elektrischen Stromes automatisch von der Rückstellfederung in die dargestellte Schließlage gebracht bzw. in dieser Stellung gehalten wird.

Das Kolben-Zylinder-Aggregat 5 ist über Hydraulikleitungen 12 und 13 mit zwei Anschlüssen eines Steuerventiles 14 verbunden, welches über zwei weitere Anschlüsse mit einem relativ drucklosen Hydraulikreservoir 15 und einer hydraulischen Druckquelle, im dargestellten Beispiel ein hydraulischer Druckspeicher 16 sowie Pumpen 17 und 18, verbunden ist. Der Druckspeicher 16 kann mittels der Pumpe 17 bzw. einer weiteren Pumpe 18 nachgeladen werden. Beide Pumpen 17 und 18 sind durch Rückschlagventile 19 gegen Rückschlag von der Druck- zu ihrer Saugseite gesichert und saugseitig an das Reservoir 15 angeschlossen. Die Pumpe 17 wird von einem Elektromotor 20 angetrieben. Die Pumpe 18 ist über eine schaltbare Kupplung 21 mit dem Motor 22 des Kraftfahrzeuges verbindbar.

Zwischen den Hydraulikleitungen 12 und 13 ist ein normal offenes Absperrventil 23 angeordnet, welches durch elektrische Bestromung seines Stellmagnetes gegen die Kraft einer Rückstellfederung aus der dargestellten Offenlage in seine Schließlage gebracht bzw. in dieser Schließlage gehalten werden kann.

Eine elektronische Regel- und Steueranordnung 24 ist eingangsseitig mit einem Geber 25 für den Istwert des Lenkwinkels der Vorderräder 1 verbunden. Dieser Geber 25 kann beispielsweise mit der Stange 3 zusammenwirken, die bei Lenkverstellung der Räder 1 einen zum Lenkwinkel analogen Stellhub ausführt.

Außerdem ist die Eingangsseite der Regel- und Steueranordnung 24 mit einem vom Lenkhandrad 9 betätigten Geber 26 für den Sollwert des Lenkwinkels verbunden.

Darüber hinaus ist die Eingangsseite der Regel- und Steueranordnung mit einem Drehmoment-Sensor 27 verbunden, welcher die zwischen Lenkhandrad 9 sowie Kolben-Zylinder-Aggregat 8 wirksamen Kräfte bzw. Momente erfaßt.

Das vom Elektromotor 10 erzeugte Moment kann durch einen weiteren Sensor oder - zumindest näherungsweise - durch Erfassung des den Elektromotor durchsetzenden elektrischen Stromes bestimmt werden.

Schließlich ist an die Eingangsseite der Regel- und Steueranordnung 24 eine Vielzahl von Drucksensoren 28, 29 und 30 angeschlossen, deren Signale die hydraulischen Drücke in den Hydraulikleitungen 6 und 7 bzw. 12 und 13 bzw. den Druck am Druckeingang des Steuerventiles 14 wiedergeben.

Ausgangsseitig ist die Regel- und Steueranordnung 24 mit den Stellmagneten der Absperrventile 11 und 23 sowie des Steuerventiles 14 verbunden. Darüber hinaus werden vom Ausgang der Regel- und Steueranordnung die Elektromotoren 10 und 20 sowie die Kupplung 21 gesteuert.

Das Lenksystem der Fig. 1 funktioniert wie folgt:

Bei normalem Betrieb werden die Umschaltventile 11 und 23 von der Regel- und Steueranordnung 24 durch Bestromung der den vorgenannten Ventilen 11 und 23 zugeordneten Stellmagnete in die nicht dargestellten Lagen gebracht und in diesen Lagen gehalten. Dementsprechend ist das Kolben-Zylinder-Aggregat 4 vom Kolben-Zylinder-Aggregat 8 sowie vom Lenkhandrad 9 hydraulisch entkoppelt.

Andererseits wird die Druckdifferenz zwischen den beiden Kolbenarbeitsräumen des Kolben-Zylinder-Aggregates 5 durch Betätigung des Steuerventiles 14 gesteuert, und zwar in der nachfolgend dargestellten Weise:

Die Regel- und Steueranordnung 24 erfaßt über den Geber 25 den Istwert des Lenkwinkels der Vorderräder 1. Über den vom Lenkhandrad betätigten Geber 26 erhält die Regel- und Steueranordnung 24 den Sollwert des Lenkwinkels. Entsprechend einem von Regel- und Steueranordnung 24 ausgeführten Soll-Istwert-Vergleich werden dann die Stellmagnete des Steuerventiles 14 gesteuert. Wenn keine Soll-Istwert-Abweichung vorhanden ist, bleibt das Steuerventil 14 in der dargestellten Mittellage, in der das Kolben-Zylinder-Aggregat 5 hydraulisch auf Freilauf geschaltet und mit dem Reservoir 15 verbunden ist, während der Druckspeicher 16, welcher in Abhängigkeit vom Signal des Drucksensors 30 über die Pumpe 17 bzw. 18, soweit erforderlich, ständig nachgeladen wird, gegenüber dem Kolben-Zylinder-Aggregat 5 abgesperrt ist. Falls eine Soll-Istwert-Abweichung auftritt, wird das Steuerventil 14 aus der dargestellten Mittellage je nach Richtungssinn der Soll-Istwert-Abweichung nach rechts oder links verschoben, so daß jeweils ein Kolbenarbeitsraum des Kolben-Zylinder-Aggregates 5 mit dem Druckanschluß des Steuerventiles 14 und der andere Kolbenarbeitsraum des Aggregates 5 mit dem Reservoir 15 steuerbar verbunden und am Kolben-Zylinder-Aggregat 5 eine steuerbare Druckdifferenz wirksam wird, mit der Folge, daß das Kolben-Zylinder-Aggregat 5 eine Stellkraft in einer von der Richtung der Soll-Istwert-Abweichung des Lenkwinkels vorgegebenen Richtung erzeugt. Auf diese Weise wird eine Soll-Istwert-Abweichung des Lenkwinkels kurzfristig ausgeregelt, und die Vorderräder 1 folgen der Lenkverstellung des Lenkhandrades 9.

Aus den Signalen der Drucksensoren 29 und/oder aus den elektrischen Spannungen und Stromstärken an den Stellmagneten des Steuerventiles 14 kann die Regler- und Steueranordnung 24 die am Kolben-Zylinder-Aggregat 5 wirksame Druckdifferenz direkt oder indirekt ermitteln, deren Maß mit den zwischen den Lenkrädern 1 und dem Kolben-Zylinder-Aggregat 5 übertragenen Kräften bzw. Momenten korreliert ist. In Korrelation zu diesem Kräften wird von der Regel- und Steueranordnung 24 ein Sollwert für eine am Lenkhandrad 9 fühlbare Handkraft bestimmt und durch entsprechende Ansteuerung des Elektromotors 10 eingestellte, wobei der Drehmoment-Sensor 27 die zwischen Elektromotor 10 und Lenkhandrad 9 wirksamen Kräfte bzw. Momente und damit den Istwert der Handkraft erfaßt. Im Ergebnis wird also der Motor 10 in Abhängigkeit von einem Soll-Istwert-Vergleich für die Handkräfte geregelt. Auf diese Weise erhält der Fahrer am Lenkhandrad 9 eine haptische Rückkopplung der zwischen den Fahrzeuglenkrädern 1 und dem Kolben-Zylinder-Aggregat 5 wirksamen Kräfte.

Die Regel- und Steueranordnung 24 überwacht sich ständig auf korrekte Funktion. Darüber hinaus werden die Signale der mit der Eingangsseite der Regel- und Steueranordnung 24 verbundenen Geber und Sensoren 25 bis 30 ständig auf Plausibilität überprüft. Sollte ein Systemfehler festgestellt werden, wird der Stellmagnet des Absperrventiles 11 stromlos geschaltet mit der Folge, daß das Absperrventil 11 in die in Fig. 1 dargestellte Schließlage umschaltet und die Kolben-Zylinder-Aggregate 4 und 8 und damit die lenkbaren Vorderräder 1 und das Lenkhandrad 9 miteinander hydraulisch zwangsgekoppelt sind.

Falls im hydraulischen System des Kolben-Zylinder-Aggregates 5 ein Fehler aufgetreten sein oder als möglich erscheinen sollte, wird auch der Stellmagnet des Absperrventiles 23 stromlos geschaltet, so daß dieses Ventil 23 die in Fig. 1 dargestellte Offenlage einnimmt und das Kolben-Zylinder-Aggregat 5 unter allen Umständen auf Freilauf geschaltet ist.

Wenn dagegen das hydraulische System des Kolben-Zylinder-Aggregates 5 einschließlich des Steuerventiles 14 betriebsbereit zur Verfügung steht, kann das Kolben-zylinder-Aggregat 5 ähnlich wie bei einer herkömmlichen Servolenkung zur Verminderung der zwischen Lenkhandrad 9 und Fahrzeuglenkrädern 1 übertragenen Kräfte gesteuert werden:

Bei eingeschalteter hydraulischer Zwangskopplung zwischen den Kolben-Zylinder-Aggregaten 4 und 8 ist die von den Drucksensoren 28 erfaßte Druckdifferenz zwischen den Leitungen 6 und 7 nach Richtung und Betrag ein analoges Maß zu den zwischen Lenkhandrad 9 und gelenkten Fahrzeugrädern 1 übertragenen Kräfte und Momente. Nunmehr steuert die Regel- und Steueranordnung 24 in Abhängigkeit von den Signalen der Drucksensoren 28 die Stellmagnete des Steuerventiles 14 derart, daß die vorgenannte Druckdifferenz vermindert wird. Damit verhält sich das dargestellte Lenksystem wie eine herkömmliche Servolenkung.

Grundsätzlich kann beim Normalbetrieb, d.h. wenn das Steuerventil 14 in Abhängigkeit von der Lenkwinkel-Soll-Istwert-Differenz, welche mit den Soll- und Istwertgebern 25 und 26 erfaßt wird, gesteuert wird, der Fall auftreten, daß das als Lenkstellantrieb für die Räder 1 dienende Kolben-Zylinder-Aggregat 5 seine konstruktiv vorgesehene Leistungsgrenze erreicht. Dieser Betriebszustand läßt sich einerseits durch Auswertung der Signale der Drucksensoren 29 feststellen, denn in einer solchen Betriebsphase müssen zwischen den Leitungen 12 und 13 Druckdifferenzen auftreten, die dem Druck am Drucksensor 30 nahekommen. Anderseits sind auch die elektrischen Spannungen und Stromstärken an den Stellmagneten des Steuerventiles 14 ein Indikator für den vorgenannten Betriebszustand. Denn die für diesen Betriebszustand charakteristische Extremstellung des Steuerventiles 14 wird nur erreicht, wenn die Stellmagnete stark unterschiedlich bestromt sind.

Wenn nun ein derartiger Betriebszustand, bei dem das Kolben-Zylinder-Aggregat 5 eine sehr hohe Kraft nahe seiner Leistungsgrenze erzeugt, festgestellt wird, ist erfindungsgemäß vorgesehen, daß das Umschaltventil 11 in die dargestellte Schließlage geschaltet wird, um eine hydraulische Zwangskopplung zwischen dem Lenkhandrad 9 und den gelenkten Fahrzeugrädern 1 herzustellen und die Möglichkeit zu bieten, mit dem Lenkhandrad 9 eine die Stellkraft des Kolben-Zylinder-Aggregates 5 unterstützende Zusatzkraft zu erzeugen. Auf diese Weise können Lenkkräfte erzeugt werden, die die Leistungsfähigkeit des Kolben-Zylinder-Aggregates 5 übersteigen.

Bei diesem Betriebszustand mit besonders hohem Lenkkraft-Bedarf steuert die Regel- und Steueranordnung 24 den Elektromotor 10 vorzugsweise entgegengesetzt zum Normalbetrieb. Während der Elektromotor 10 beim Normalbetrieb einen Lenkwiderstand simuliert, der analog zur Stellkraft des Kolben-Zylinder-Aggregates 5 ist, und damit gegen die Handkraft des Fahrers arbeitet, ist beim Betriebszustand mit hohem Lenkkraftbedarf bevorzugt vorgesehen, daß der Elektromotor 10 unterstützend zum Kolben-Zylinder-Aggregat wirkt. Der Elektromotor 10 erzeugt also ein den Fahrer am Lenkhandrad 9 unterstützendes Moment, welches zu den vom Sensor 27 erzeugten Signalen korreliert ist. Das vom Stellmotor 10 erzeugte Lenkmoment wird dabei, wie beim Normalbetrieb, durch den Sensor 27 oder über die Polarität und Stärke des elektrischen Motorstroms erfaßt.

Sobald nun der Fahrer das Lenkhandrad 9 mit einer den vom Motor 10 erzeugten Lenkwiderstand übersteigenden Handkraft betätigt, wird aufgrund der hydraulischen Zwangskopplung zwischen den Kolben-Zylinder-Aggregaten 4 und 8 eine zur Stellkraft des Kolben-Zylinder-Aggregates 5 parallele zusätzliche Stellkraft zur Lenkverstellung der Räder 1 wirksam.

Die insgesamt an den lenkbaren Rädern 1 wirksamen Lenkkräfte kann die Regel- und Steueranordnung 24 aus den Signalen der Drucksensoren 28 und 29 ermitteln, wobei die Signale der letzteren Drucksensoren 29 gegebenenfalls auch durch Erfassung der Bestromung der Stellmagnete des Steuerventiles 14 sowie der Signale des Drucksensors 30 ersetzt bzw. auf Plausibilität überprüft werden können.

Die Signale der Drucksensoren 28 können gegebenenfalls dadurch ersetzt bzw. auf Plausibilität überprüft werden, daß die Regel- und Steueranordnung 24 beim Umschalten des Umschaltventiles 11 in die dargestellte Schließlage, d.h. bei Herstellung der hydraulischen Zwangskopplung zwischen den Kolben-Zylinder-Aggregaten 4 und 8, die Relation des vom Geber 25 erfaßten Lenkwinkel-Istwertsignals zum vom Geber 26 erzeugten Lenkwinkel-Sollwertsignal speichert. Unter Berücksichtigung der hydraulischen Übersetzung zwischen den Hydraulik-Aggregaten 4 und 8 "weiß" die Regel- und Steueranordnung 24 dann, welche Signale der Geber 25 und 26 zusammenfallen müssen, wenn zwischen den Kolben-Zylinder-Aggregaten 4 und 8 keine bzw. allenfalls verschwindende Kräfte und Momente hydraulisch übertragen werden. Bei Übertragung größerer Kräfte und Momente werden aufgrund von Elastizitäten der Wandungen der Leitungen 6 und 7 sowie aufgrund der (allerdings geringen) Kompressibilität des hydraulischen Mediums mehr oder weniger große Abweichungen der Signale der Sensoren 25 und 26 von den für verschwindende Kräfte charakteristischen Wertepaarungen auftreten.

Wichtig ist, daß bei geschlossenem Umschaltventil 11 und damit eingeschalteter Zwangskopplung zwischen den Kolben-Zylinder-Aggregaten 4 und 8 die Signale der Sensoren 25 und 26 entweder unbeachtet bleiben oder in vorangehend beschriebener Weise von der Regel- und Steueranordnung 24 zur Ermittlung von zwischen den Aggregaten 4 und 8 hydraulisch übertragenen Kräften herangezogen werden.

Im Ergebnis kennt also die Regel- und Steueranordnung 24 die Summe der Lenkstellkräfte, die von den Kolben-Zylinder-Aggregaten 4 und 5 parallel erzeugt werden. Solange diese Summe oberhalb oder in der Nähe der mit dem Kolben-Zylinder-Aggregat 5 allein maximal erzeugbaren Kräfte liegt, bleibt die Zwangskopplung zwischen den Aggregaten 4 und 8 und damit die Zwangskopplung zwischen dem Lenkhandrad 9 und den lenkbaren Fahrzeugrädern 1 aufrechterhalten. Sobald die genannte Kräftesumme einen Schwellwert unterschreitet, wird das Umschaltventil 11 von der Regel- und Steueranordnung wieder geöffnet. Nachfolgend erfolgt dann die Steuerung des Steuerventiles 14 wiederum entsprechend dem Normalbetrieb in Abhängigkeit der von den Gebern 25 und 26 ermittelten Soll-Istwert-Differenz des Lenkwinkels.

Um am Lenkhandrad 9 einen Kraftstoß beim Öffnen des Umschaltventiles 11 zu vermeiden, wird die Kraft des Kolben-Zylinder-Aggregates 5 durch entsprechende Steuerung des Steuerventiles 14 von der Regel- und Steueranordnung 24 derart eingeregelt, daß die zwischen den Kolben-Zylinder-Aggregaten 4 und 8 übertragenen Kräfte nur noch einen geringen Restwert haben, wobei die Richtung dieser Restkraft so ausgerichtet ist, daß das Kolben-Zylinder-Aggregat 4 eine zur Stellkraft des Aggregates 5 gleichgerichtete Reststellkraft erzeugt.

In diesem Zusammenhang ist vorteilhaft, wenn bei der oben geschilderten Betriebsphase, bei der die zur Lenkverstellung der Lenkräder 1 notwendigen Stellkräfte nahe der Leistungsgrenze des Kolben-Zylinder-Aggregates 5 liegen bzw. diese Leistungsgrenze überschreiten und deswegen zusätzlich die Zwangskopplung zwischen Lenkhandrad 9 und gelenkten Rädern 1 eingeschaltet wird, der Elektromotor 10 immer, wie beim Normalbetrieb, einen Lenkwiderstand erzeugt, der korreliert ist mit den vom Kolben-Zylinder-Aggregat 5 erzeugten Stellkräften.

Gemäß einer besonders bevorzugten Ausführungsform der Erfindung kann vorgesehen sein, daß der vom Elektromotor 10 erzeugte Lenkwiderstand zunehmend abnimmt, wenn die zwischen den Kolben-Zylinder-Aggregaten 4 und 8 hydraulisch übertragenen Kräfte, die aus den Signalen der Drucksensoren 28 bzw. der Geber 25 und 26 ermittelbar sind, im Vergleich zu den om Kolben-Zylinder-Aggregat 5 erzeugten Stellkärften, die aus den Signalen der Drucksensoren 29 bzw. der Bestromung der Stellmagnete des Steuerventils ermittelbar sind, ansteigen. Im Ergebnis kann also der vom Elektromotor 10 erzeugte Lenkwiderstand vom Verhältnis der von den Kolben-Zylinder-Aggregaten 4 und 5 erzeugten Kräfte abhängen. Sobald die zwischen den Aggregaten 4 und 5 übertragenen Kräfte abnehmen bzw. sich einem verschwindenden Wert annähern, wird der Elektromotor jedoch wieder in normaler Weise in normaler Korrelation zu den vom Aggregat 5 erzeugten Stellkräften gesteuert.

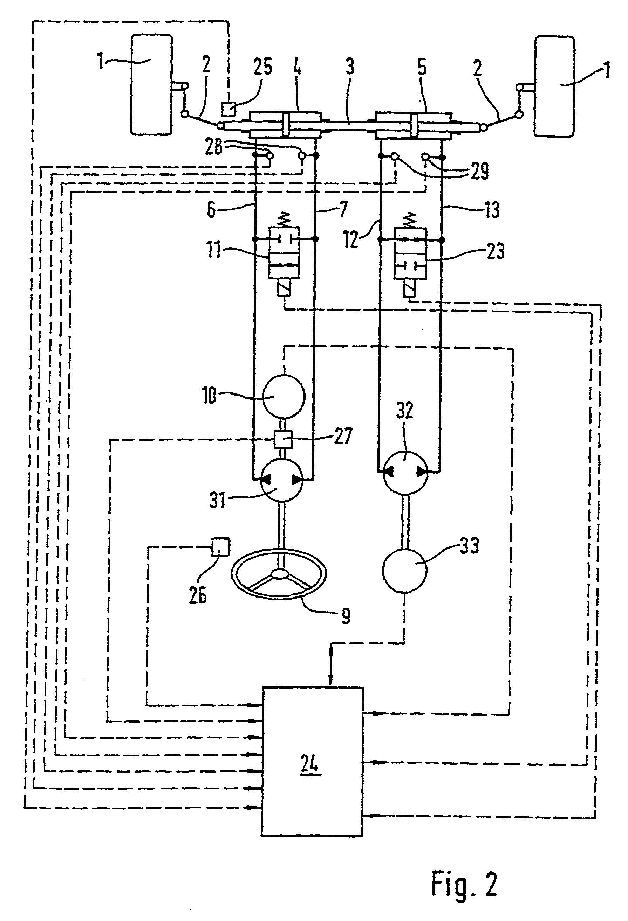

Die in Fig. 2 dargestellte Ausführungsform unterscheidet sich von der Anordnung nach Fig. 1 im wesentlichen dadurch, daß das Kolben-Zylinder-Aggregat 8 durch eine hydrostatische, reversierbare Pumpe 31 ersetzt ist, mit der Hydraulikmedium zwischen den Hydraulikleitungen 6 und 7 ausgetauscht werden kann. Diese Pumpe 31 ist einerseits mit dem Elektromotor 10 und andererseits mit dem Lenkhandrad 9 antriebsmäßig zwangsgekoppelt.

Außerdem kann eine weitere reversierbare und vorzugsweise ebenfalls hydrostatische Pumpe 32 die Hydraulikleitungen 12 und 13 verbinden. Zum Antrieb dieser Pumpe dient ein Elektromotor 33, welcher von der Regel- und Steueranordnung 24 betätigt wird.

Die Funktionsweise der Ausführungsform der Fig. 2 stimmt mit der Funktionsweise der Ausführungsform nach Fig. 1 weitestgehend überein.

Wenn das Umschaltventil 11 seine Schließlage einnimmt, sind die hydrostatische Pumpe 31 und das Kolben-Zylinder-Aggregat 4 und damit die lenkbaren Fahrzeugräder 1 und das Lenkhandrad 9 miteinander zwangsgekoppelt.

Diese Zwangskopplung wird dann vorgenommen, wenn die Regelund Steueranordnung 24 eine Fehlfunktion im Lenksystem feststellen sollte. Soweit in einem solchen Falle eine Fehlfunktion an Teilen des hydraulischen Systems des Kolben-Zylinder-Aggregates 5 vorliegt oder als möglich erscheint, wird automatisch die Stromversorgung des Magnetes des Umschaltventiles 23 abgeschaltet, so daß das Umschaltventil 23 in die in Fig. 2 dargestellte Offenlage umschaltet und das Kolben-Zylinder-Aggregat 5 unter allen Umständen hydraulisch auf Freilauf geschaltet ist.

Bei Normalbetrieb, d.h. wenn die Regel- und Steueranordnung 24 keinerlei Fehlfunktion erkennt, werden die Umschaltventile 11 und 23 von der Regel- und Steueranordnung 23 jeweils in ihren in Fig. 2 nicht gezeigten Stellungen gehalten. Der Elektromotor 33 wird dann von der Regel- und Steueranordnung in Abhängigkeit von einem Soll-Istwert-Vergleich des Lenkwinkels, d.h. in Abhängigkeit von der Differenz zwischen den Signalen der Geber 25 und 26, in der einen oder anderen Richtung mit mehr oder weniger großer Stellkraft betrieben, so daß das Kolben-Zylinder-Aggregat 5 eine entsprechende Stellkraft auf die gelenkten Räder 1 überträgt.

Falls der Elektromotor in die Nähe seiner Leistungsgrenze kommt, kann wiederum durch Umschaltung des Umschaltventiles 11 in die in Fig. 2 dargestellte Lage eine Zwangskopplung von Lenkhandrad 9 und gelenkten Fahrzeugrädern 1 vorgenommen werden, so daß der Fahrer mit seiner Handkraft die Arbeit des Elektromotors 33 bzw. des Kolben-Zylinder-Aggregates 5 zu unterstützen vermag, wie es oben anhand der Fig. 1 erläutert wurde.

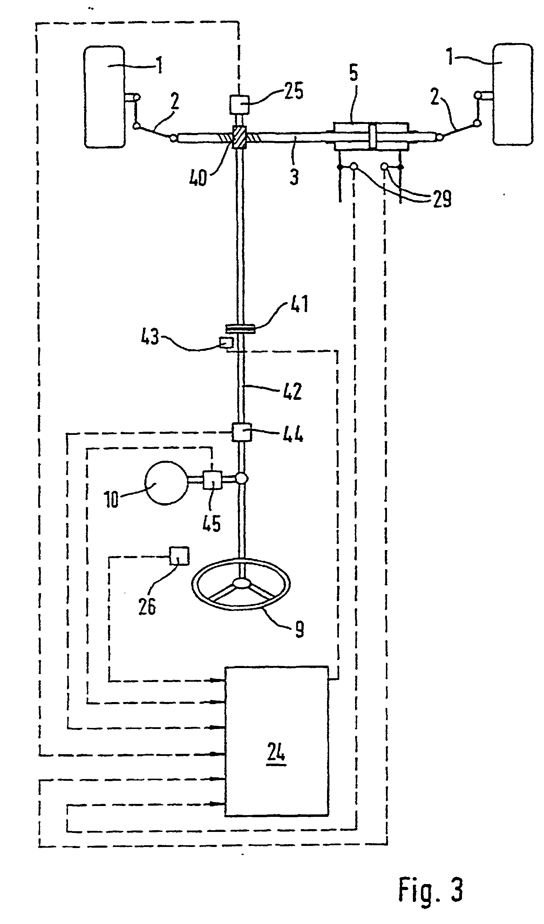

Die in Fig. 3 dargestellte Ausführungsform unterscheidet sich von den vorangehend beschriebenen Ausführungsformen zunächst dadurch, daß für den Notfall ein mechanischer Durchtrieb zwischen Lenkhandrad 9 und gelenkten Fahrzeugrädern 1 vorgesehen ist.

Im dargestellten Beispiel ist dazu die Stange 3 als Zahnstange angeordnet, welche mit einem Ritzel 40 kämmt, das seinerseits über eine durch Federung in Schließrichtung beaufschlagte Kupplung 41 und eine anschließende Welle 42 mit dem Lenkhandrad 9 mechanisch verbunden ist. Die Kupplung 41 kann durch einen Stellmotor 43 gegen die Kraft ihrer Schließfederung geöffnet werden, um den mechanischen Durchtrieb zwischen gelenkten Fahrzeugrädern und Lenkhandrad 9 aufzutrennen. Die Welle 42 ist des weiteren mit dem selbsthemmungsfreien Elektromotor 10 antriebsmäßig (selbsthemmungsfrei) verbunden. Zwischen dem Lenkhandrad 9 und der Welle 42 sowie zwischen dem Elektromotor 10 und der Welle 42 sind jeweils Drehmomentsensoren 44 und 45 angeordnet.

Das Ritzel 40 ist mit dem als Winkelsensor ausgebildeten Geber 25 zur Ermittlung des Lenkwinkel-Istwertes verbunden. Die Welle 42 ist am Lenkhandrad 9 mit dem ebenfalls als Winkelsensor ausgebildeten Geber 26 verbunden, der beim Normalbetrieb als Lenkwinkel-Sollwertgeber dient.

Im übrigen bildet die Stange 3 wiederum die Kolbenstange des Kolben-Zylinder-Aggregates 5, welches wiederum gemäß der Anordnung nach Fig. 1 oder 2 betätigt werden kann.

Bei Normalbetrieb wird der Stellmotor 43 der Kupplung 41 von der Regel- und Steueranordnung 24 ständig erregt, derart, daß er die Kupplung 41 gegen die Kraft ihrer Schließfederung offenhält. Darüber hinaus betätigt die Regel- und Steueranordnung 24 das Kolben-Zylinder-Aggregat 5 bzw. die dieses Aggregat 5 steuernden Elemente derart, daß durch die vom Aggregat 5 erzeugten Stellkräfte eine eventuelle Differenz zwischen dem vom Geber 26 gelieferten Lenkwinkel-Sollwert und dem vom Geber 25 gelieferten Lenkwinkel-Istwert ausgeregelt wird. Hierzu wird auf die Ausführungen zu den Fig. 1 und 2 verwiesen.

Bei eventuellen Systemstörungen wird der Stellmotor 43 von der Regel- und Steueranordnung 24 abgeschaltet, so daß die Kupplung 41 schließt und Lenkhandrad und gelenkte Fahrzeugräder 1 miteinander zwangsgekoppelt sind.

Soweit im hydraulischen System des Kolben-Zylinder-Aggregates 5 eine Störung vorliegt oder möglich sein kann, wird gleichzeitig das Kolben-Zylinder-Aggregat 5 auf hydraulischen Freilauf geschaltet, wie oben zu den Fig. 1 und 2 erläutert wurde.

Wenn der mechanische Durchtrieb zwischen Lenkhandrad 9 und gelenkten Fahrzeugrädern 1 wirksam geschaltet wird, weil das Kolben-Zylinder-Aggregat 5 in die Nähe seiner Leistungsgrenze kommt und deshalb eine Unterstützung dieses Aggregates 5 durch die Handkraft des Fahrers notwendig wird, kann die Regel- und Steueranordnung 24 die Summe der wirksamen Lenkkräfte aus den von den Druckgebern 29 erzeugten Signalen, die die Stellkraft des Kolben-Zylinder-Aggregates 5 wiedergeben, sowie den von den Drehmomentsensoren 44 und 45 erzeugten Signalen ermitteln, die die zusätzlich über die Kupplung 41 an die Räder 1 übertragenen Lenkkräfte anzeigen. Die Signale des Sensors 45 können gegebenenfalls durch Erfassung von Polarität und Stärke des den Motor 10 durchsetzenden elektrischen Stromes ergänzt oder ersetzt werden.

Die vom mechanischen Durchtrieb erzeugten Lenkkräfte können gegebenenfalls auch aus den Signalen der Geber 25 und 26 sowie aus der Polarität und Stärke des den Elektromotor 10 durchsetzenden elektrischen Stromes ermittelt werden, vorausgesetzt, daß die Regel- und Steueranordnung 24 beim Schließen der Kupplung die Relation der Signale der Geber 25 und 26 registriert hat und damit "weiß", bei welcher Signalrelation ein von Torsionsspannungen freier Zustand der Welle 42 zwischen den Gebern 25 und 26 vorliegt. Bei Drehmomentübertragung wird die Welle 42 mehr oder weniger stark tordiert, wobei das Maß der Torsion und damit das Maß der von der Welle 42 übertragenen Momente aus den Signalen der Geber 25 und 26 ermittelbar ist.

Mit dem Drehmomentsensor 45 kann bei allen Betriebszuständen der vom Elektromotor 10 erzeugte Lenkwiderstand ermittelt werden.

Im Ergebnis läßt sich also die gleiche Betriebsweise wie bei der Ausführungsform nach Fig. 1 erreichen.

Abweichend von den dargestellten Ausführungsformen kann anstelle des Kolben-Zylinder-Aggregates 5 auch ein anderes Stellaggregat, beispielsweise ein selbsthemmungsfreier Elektromotor, vorgesehen sein. In jedem Falle läßt sich der allgemeine Gedanke der Erfindung verwirklichen, bei Erreichen der Leistungsgrenze des Stellaggregates 5 jeweils eine Zwangskopplung zwischen Lenkhandrad 9 und gelenkten Fahrzeugrädern 1 vorzunehmen, so daß der Fahrer über das Lenkhandrad 9 den Stellantrieb 5 zu unterstützen vermag.

In der Regel wird das Übersetzungsverhältnis zwischen dem Drehwinkel des Lenkhandrades 9 und dem Lenkwinkel der gelenkten Fahrzeugräder 1 im Steer-by-wire-Modus einen anderen Wert haben als bei Betriebszuständen mit mechanischer oder hydraulischer Zwangskopplung zwischen Lenkhandrad 9 und gelenkten Fahrzeugrädern 1. Dies wird von der Regel- und Steueranordnung 24 insbesondere dann berücksichtigt, wenn aus einer Betriebsphase, bei der der Lenkstellantrieb bzw. das Kolben-Zylinder-Aggregat 5 parallel zum unterstützenden Betrieb der eingeschalteten Zwangskopplung zwischen Lenkhandrad 9 und gelenkten Fahrzeugrädern 1 arbeitet, in den Steer-by-wire-Modus zurückgeschaltet wird, wenn also beispielsweise die gelenkten Fahrzeugräder 1 zunächst mit unterstützendem Betrieb der Zwangskopplung gegen ein Lenkhindernis gelenkt und danach bei vergleichsweise geringem Lenkwiderstand zurückgelenkt werden. Während der Rücklenkphase wird dann von der Regel- und Steuereinrichtung während der erneut eingeschalteten Steer-by-wire-Modus das Übersetzungsverhältnis zwischen den Drehbewegungen des Lenkhandrades und der Lenkwinkeländerung der gelenkten Fahrzeugräder so verändert, daß das Lenkhandrad 9 seine der Geradeaussstellung der gelenkten Fahrzeugräder 1 zugeordnete Lage erreicht, wenn die gelenkten Fahrzeugräder 1 in ihre Geradeausstellung kommen. Nachfolgend kann dann mit dem für den Steer-by-wire-Modus normal vorgesehenen Übersetzungsverhältnis gearbeitet werden.

Abweichend von den in den Fig. 1 und 2 dargestellten Ausführungsformen kann der Sensor 27 auch lenkhandradseitig des Aggregates 8 bzw. der Pumpe 31 angeordnet sein.

In Abweichung von der Fig. 3 kann der Sensor 44 lenkhandradseitig der Antriebsverbindung zwischen Elektromotor 10 und Welle 42 angeordnet sein.

## Patentansprüche

1. Lenksystem für nicht spurgebundene Kraftfahrzeuge, mit
- einer vom Fahrer betätigten Lenkhandhabe (9), z.B. Lenkhandrad,
- einem Lenkstellantrieb (5) zur Lenkverstellung lenkbarer Fahrzeugräder,
- einem mit der Lenkhandhabe betätigbaren Lenkwinkel-Sollwertgeber (26),
- einem mit den lenkbaren Fahrzeugrädern betätigbaren Lenkwinkel-Istwertgeber (25),
- einer den Lenkstellantrieb (5) in Abhängigkeit von einem Vergleich der Soll- und Istwerte des Lenkwinkels steuernden und sich sowie mit ihr zusammenwirkende Sensorik ständig auf Fehlfunktion überprüfenden Regelanordnung und
- einer zwischen der Lenkhandhabe (9) und den lenkbaren Fahrzeugrädern (1) angeordneten mechanischen oder hydraulischen Zwangskopplung, welche einen unwirksamen Normalzustand, bei dem sie bei korrekt arbeitender Regelanordnung geöffnet wird bzw. offen bleibt, und einen wirksamen Sonderzustand, bei dem sie bei fehlerhafter Regelanordnung automatisch geschlossen wird, aufweist,
**dadurch gekennzeichnet,**
**daß** die Regelanordnung (24) einen Parameter, der mit zwischen Lenkstellantrieb (5) und lenkbaren Fahrzeugrädern (1) übertragenen Kräften bzw. Momenten korreliert ist, auswertet bzw. erfaßt und die Zwangskopplung bei höherer Belastung des Stellantriebes (5) unterstützend bzw. parallel zum Lenkstellantrieb (5) wirksam schaltet, so daß eine die Lenkhandhabe beaufschlagende Handkraft den Stellantrieb (5) zu unterstützen vermag.

2. Lenksystem nach Anspruch 1,
**dadurch gekennzeichnet,**
**daß** die Regelanordnung (24) bei eingeschalteter Zwangskopplung einen weiteren Parameter auswertet bzw. erfaßt, der mit zwischen Lenkhandhabe (9) und lenkbaren Fahrzeugrädern (1) übertragenen Kräften bzw. Momenten korreliert ist.

3. Lenksystem nach Anspruch 1 oder 2,
**dadurch gekennzeichnet,**
**daß** ein mit der Lenkhandhabe (9) antriebsverbundener Handkraftsteller (10), welcher von der Regelanordnung (24) beim unwirksamen Normalzustand der Zwangskopplung zur Simulation eines Lenkwiderstandes in Korrelation zu den zwischen den gelenkten Fahrzeugrädern (1) und dem Lenkstellantrieb (5) übertragenen Kräften betätigt wird, auch bei unterstützend wirksam geschalteter Zwangskopplung von Lenkhandhabe (9) und gelenkten Fahrzeugrädern (1) einen mit der Stellkraft des Stellantriebes (5) korrelierten Lenkwiderstand erzeugt.

4. Lenksystem nach einem der Ansprüche 1 bis 3,
**dadurch gekennzeichnet,**
**daß** die Zwangskopplung zwischen Lenkhandhabe (9) und gelenkten Fahrzeugrädern (1) wieder aufgetrennt wird, sobald die Summe der zwischen Lenkhandhabe (9) und lenkbaren Fahrzeugrädern (1) übertagenen Kräfte bzw. Momente sowie der zwischen Stellantrieb (5) und lenkbaren Fahrzeugrädern (1) übertragenen Kräfte bzw. Momente einen vorgebbaren bzw. vorgegebenen Schwellwert unterschreitet, der etwas unterhalb des maximalen Wertes der vom Stellantrieb (5) erzeugbaren Kräfte bzw. Momente liegt.

5. Lenksystem nach einem der Ansprüche 1 bis 4,
**dadurch gekennzeichnet,**
**daß** der vom Handkraftsteller (10) erzeugte Lenkwiderstand, der mit den vom Stellantrieb (5) erzeugten Stellkräfte korreliert ist, vermindert wird, wenn die zwischen Lenkhandhabe (9) und gelenkten Fahrzeugrädern (1) übertragenen Kräfte ansteigen bzw. einen Schwellwert überschreiten und der Stellantrieb (5) in der Nähe seiner Leistungsgrenze arbeitet.

## Claims

1. Steering system for non track-bound motor vehicles, with
- a driver-actuated steering handle (9) or steering wheel,
- a steering adjustment drive (5) for adjusting the position of the steered vehicle wheels,
- a nominal steering angle value indicator (26) which can be actuated by the steering handle,
- an actual steering angle indicator (25) which cab be actuated by the steered vehicle wheels,
- a regulator arrangement which controls the steering position drive (5) as a function of a comparison between the nominal and actual values of the steering angle and which, with its cooperating sensor system, monitors itself continuously for defective operation,
- a mechanical or hydraulic forced coupling arranged between the steering handle (9) and the steered vehicle wheels (1), which is or remains open in an inactive condition when the regulator arrangement is operating correctly and is automatically engaged in an active special condition when the regulator arrangement is defective,
**characterised in that**
the regulator arrangement (24) evaluates or detects a parameter that is correlated with forces or torques transferred between the steering adjustment drive (5) and the steered vehicle wheels (1) and, when the load on the adjustment drive (5) is high, engages the forced coupling in support of or in parallel with the steering adjustment drive (5) so that a manual force on the steering handle can support the adjustment drive (5).

2. Steering system according to Claim 1,
**characterised in that**
when the forced coupling is engaged, the regulator arrangement evaluates a further parameter which is correlated with the forces or torques transferred between the steering handle (9) and the steered vehicle wheels (1).

3. Steering system according to Claims 1 or 2,
**characterised in that**
a manual force adjuster (10) in drive connection with the steering handle (9), which is actuated by the regulator arrangement (24) in the inactive normal condition of the forced coupling to simulate a steering resistance in correlation with the forces transferred between the steered vehicle wheels (1) and the steering adjustment drive (5), also produces a steering resistance correlated with the controlling force of the adjustment drive (5) when the forced coupling between the steering handle (9) and the steered vehicle wheels (1) is in active supporting engagement.

4. Steering system according to any of Claims 1 to 3,
**characterised in that**
the forced coupling between the steering handle (9) and the steered vehicle wheels (1) is released again as soon as the sum of the forces or torques transferred between the steering handle (9) and the steered vehicle wheels (1) and the forces or torques transferred between the adjustment drive (5) and the steered vehicle wheels (1) falls below a specifiable or specified threshold value, which is somewhat lower than the maximum value of the forces or torques that can be produced by the adjustment drive (5).

5. Steering system according to any of Claims 1 to 4,
**characterised in that**
the steering resistance produced by the manual force adjuster (10), which is correlated with the adjustment forces produced by the adjustment drive (5), is reduced when the forces transferred between the steering handle (9) and the steered vehicle wheels (1) increase or rise above a threshold value and the adjustment drive (5) is operating close to the limits of its power.

## Revendications

1. Système de direction pour automobiles non guidées, avec
- une manette de direction (9) commandé par le conducteur, par exemple volant de direction,
- une commande de réglage de direction (5) pour le réglage de direction des roues directrices du véhicule,
- un indicateur de valeur de consigne (26) d'angle de direction pouvant être commandé par la manette de direction,
- un indicateur de valeur effective (25) d'angle de direction pouvant être commandé par les roues directrices du véhicule,
- un dispositif de réglage qui actionne la commande de réglage de direction (5) selon une comparaison des valeurs de consigne et des valeurs effectives de l'angle de direction, et qui contrôle en permanence le fonctionnement défectueux avec son analyse sensorielle concourante et,
- un accouplement forcé mécanique ou hydraulique disposé entre la manette de direction (9) et les roues directrices (1) du véhicule, qui présente un état normal inefficace dans lequel il est ouvert ou reste ouvert pour un dispositif de réglage fonctionnant correctement, et qui présente un état spécial efficace dans lequel il est fermé automatiquement pour un dispositif de réglage défectueux,
**caractérisé en ce que**,
le dispositif de réglage (24) évalue ou enregistre un paramètre qui est en corrélation avec des forces ou des moments transmis entre la commande de réglage de direction (5) et les roues directrices (1) du véhicule, et l'accouplement forcé pour une charge plus élevée de la commande de réglage de direction (5) commute efficacement en soutien ou parallèlement à la commande de réglage de direction (5), de sorte qu'une force manuelle qui agit sur la manette de direction soutient volontiers la commande de réglage de direction (5).

2. Système de direction selon la revendication 1,
**caractérisé en ce que**,
le dispositif de réglage (24) évalue ou enregistre pour un accouplement forcé commuté un autre paramètre qui est en corrélation avec les forces ou les moments transmis entre la manette de direction (9) et les roues directrices (1) du véhicule.

3. Système de direction selon la revendication 1 ou 2,
**caractérisé en ce que**,
un vérin à force manuelle (10) relié par entraînement à la manette de direction (9), qui est actionné par le dispositif de réglage (24) pour un état normal inefficace de l'accouplement forcé à des fins de simulation d'une résistance de direction liée aux forces transmises entre les roues directrices (1) du véhicule et la commande de réglage de direction (5), produit une résistance de direction liée à la force de direction de la commande de réglage de direction (5) même avec un accouplement forcé, commuté efficacement en soutien, de la manette de direction (9) et des roues directrices (1) du véhicule.

4. Système de direction selon l'une des revendications 1 à 3,
**caractérisé en ce que**,
l'accouplement forcé entre la manette de direction (9) et les roues directrices (1) du véhicule est à nouveau coupé, dès que la somme des forces ou des moments transmis entre la manette de direction (9) et les roues directrices (1) du véhicule, et des forces ou des moments transmis entre la commande de réglage de direction (5) et les roues directrices (1) du véhicule est inférieure à une valeur de seuil prédéfinie ou pouvant être prédéfinie, qui est inférieure à la valeur maximale des forces ou des moments pouvant être produits par la commande de réglage de direction (5).

5. Système de direction selon l'une des revendications 1 à 4,
**caractérisé en ce que**,
la résistance de direction produite par le vérin à force manuelle (10), qui agit en corrélation avec les forces de réglage produites par la commande de réglage de direction (5), est réduite, lorsque les forces transmises entre la manette de direction (9) et les roues directrices (1) du véhicule augmentent ou dépassent une valeur de seuil et que la commande de réglage de direction (5) fonctionne à un niveau proche de sa limite de puissance.
